# EUROPÄISCHE PATENTANMELDUNG

(11) **EP 4 307 147 A1**
(43) Veröffentlichungstag der Anmeldung: **17.01.2024**
(21) Anmeldenummer: 22184343.6
(22) Anmeldetag: 12.07.2022
(51) Int. Cl.: G06F 21/57, G06F 21/64

(54) **ANWENDUNGSPROGRAMM AUSGEBILDET EINE UMGEBUNGSINFORMATION ZU ERSTELLEN**

(71) Anmelder: Siemens Aktiengesellschaft, 80333 München (DE)
(72) Erfinder: Falk, Rainer Dr., 85586 Poing (DE); Feist, Christian Peter, 80689 München (DE); Pyka, Stefan, 85570 Markt Schwaben (DE); Zeschg, Thomas, 81543 München (DE)
(74) Vertreter: Siemens Patent Attorneys

(57) **Zusammenfassung**

Die Erfindung betrifft ein Anwendungsprogramm (A), ausgebildet in einer Ausführungsumgebung ausgeführt zu werden, aufweisend:
- eine Dokumentationseinheit, ausgebildet eine Umgebungsinformation zu erstellen, wobei die Umgebungsinformation die Ausführungsumgebung zu einer Laufzeit des Anwendungsprogramms (A) beschreibt, und
- eine Attestierungseinheit, ausgebildet die Umgebungsinformation kryptographisch zu schützen, wodurch eine Attestierungsinformation gebildet wird.

Außerdem betrifft die Erfindung eine Ausführungsumgebung, ein Steuergerät (AC) und ein zugehöriges Verfahren.

## Beschreibung

### HINTERGRUND DER ERFINDUNG

### Gebiet der Erfindung

Die vorliegende Erfindung betrifft ein Anwendungsprogramm. Die Erfindung betrifft außerdem eine zugehörige Ausführungsumgebung, ein Steuergerät und ein zugehöriges Verfahren.

### Beschreibung des Stands der Technik

Durch die zunehmende Vernetzung in industriellen Anwendungen, sowie den Bedarf größere Datenmengen für die Optimierung von Herstellungsprozessen lokal zu verarbeiten, werden industrielle Geräte zunehmend flexibel hinsichtlich ihrer Funktionalität gestaltet. Dies wird insbesondere durch die Unterstützung von nachladbaren Applikationen, auch als Anwendungen oder Apps bezeichenbar, ermöglicht, mit denen die Gerätefunktionalität auch im Feld einfach und schnell angepasst werden kann.

Dabei soll dem Kunden ein möglichst breites Spektrum an Apps angeboten werden. Auf einem Gerät können Apps von unterschiedlichen Anbietern ausgeführt werden. Die Umgebung, in der eine App ausgeführt wird, kann somit stark variieren, insbesondere einer Vielzahl unterschiedlicher außerdem ausgeführter Apps, Basis-Betriebssystem-Varianten und/oder Hardware. Die Eigenschaften der Ausführungsumgebung einer App können somit entscheidend dafür sein, wie vertrauenswürdig die von einer App bereitgestellten Daten sind. Dies ist in einem industriellen Umfeld dann wichtig, wenn einer App Zugriff auf kritische Daten gegeben werden soll, bzw. wenn die Ergebnisse einer App in einer Entscheidung, insbesondere zur Anpassung einer Steuerungslogik, berücksichtigt werden sollen.

Grundsätzlich sind Compliance-Checks und Attestierungsmechanismen bekannt, um insbesondere eine Aussage über die Integrität der auf einer Compute-Plattform laufenden Software zu erhalten. Diese werden von der Plattform bereitgestellt und sind in der Nutzung oft kompliziert oder unflexibel, da es sich insbesondere um proprietäre Lösungen von Hardware-Herstellern handelt und/oder Abhängigkeiten zur Infrastruktur von Hardware-Herstellern bestehen.

Es ist eine sogenannte "remote attestation" bekannt, insbesondere im Zusammenhang mit Measured Boot und einem Trusted Platform Module (TPM). Dabei wird, ausgehend von einer "rootof-trust", für jede Boot-Komponente eine kryptographische Prüfsumme durch eine "Root-of-Trust-for-Measurement"-Komponente berechnet. Die Prüfsummen können anschließend z.B. in einem TPM in speziellen Registern, sog. Platform Configuration Registers (PCRs), hinterlegt werden, in dem ein PCR-Register abhängig von der ermittelten Prüfsumme aktualisiert wird. Die Liste an PCR-Werten kann zudem mit einem im TPM gespeicherten und nicht extrahierbaren privaten Schlüssel signiert und zusammen mit der Signatur anschließend an eine andere Instanz (z.B. einen Server) zur Überprüfung weitergegeben werden. Der Zugang des Gerätes zu einem Service, oder allgemein einem Netzwerk, kann so in Abhängigkeit der gemessenen Boot-Komponenten kontrolliert werden.

Es sind Trusted Execution Environments (TEE) bekannt. Diese stellen eine speziell geschützte Ausführungsumgebung dar, die von der regulären Ausführungsumgebung (normal world) nur über eine wohldefinierte Schnittstelle zugreifbar ist. Dadurch kann verhindert werden, dass z.B. ein lokaler Systemadministrator oder eine Schadsoftware (Malware), die in der regulären Ausführungsumgebung vorliegt, die Programmausführung in der TEE-Ausführungsumgebung manipulieren kann. Beispiele für TEEs sind Intel SGX, Intel TDX, AMD SEV, ARM TrustZone.

Einige dieser Technologien, wie Intel SGX, Intel TDX und AMD SEV, bieten eine Hardware-gestützte Möglichkeit, um den Zustand der in einem TEE geladenen Software zu attestieren. Mit einer ausgestellten Attestierung kann die Integrität und Authentizität der geladenen Software durch einen Anwender geprüft werden und anschließend ein Geheimnis (z.B. Schlüssel zur Entschlüsselung eines Dateisystems der in dem TEE laufenden Software) an die Software im TEE übertragen werden. Dabei ist von manchen Realisierungen wie Intel SGX bekannt, dass die Attestierungsfunktionalität durch einen speziellen vom Hardware-Hersteller bereitgestellten Launch-Programmcode realisiert ist, der in einer Hardware-geschützten Enklave ausgeführt wird (d.h. dass die Intel-Enklave die Attestierung für die Anwender-Enklave bildet).

Von AMD SEV und Intel TDX ist prinzipiell bekannt, unterschiedlichen virtuellen Maschinen bzw. Containern zufällig gewählte, unterschiedliche Schlüssel zuzuordnen, die für eine Speicherverschlüsselung der Daten der virtuellen Maschinen verwendet werden. So lässt sich eine kryptographische Isolierung einer virtuellen Maschine gegenüber einem kompromittierten Host, sowie gegenüber anderen virtuellen Maschinen realisieren.

Bekannt sind verschiedenste Obfuskationsmethoden, um Programmcode für Menschen schwer verständlich zu machen und so ein Reverse Engineering oder eine für den Angreifer nützliche Veränderung des Codes zu verhindern. Es sind auch zahlreiche Obfuskationstools erhältlich, die weitestgehend automatisch obfuszierende Transformationen auf ein Programm anwenden. Dies geschieht in der Regel entweder auf Basis des Sourcecodes oder ausgehend vom fertig kompilierten und gelinkten Maschinencode einer Applikation.

Es ist "Verifiable Computing" bekannt, wo Berechnungen auf möglicherweise nicht vertrauenswürdige Systeme ausgelagert werden und dort als Teil der Berechnung ein verifizierbares Ergebnis produzieren. Das verifizierbare Ergebnis kann verwendet werden, um zu überprüfen, ob die Berechnung wie angedacht richtig durchgeführt wurde. Beispielhafte und bekannte Umsetzungen basieren auf Homomorphic Encryption oder Obfuskation, oder auf einer Mehrfachberechnung auf unterschiedlichen Systemen.

Von Android ist der SafetyNet Service bekannt. Ziel von SafetyNet ist es, kritischen Apps (z.B. Banking- oder Bezahl-Apps) zu ermöglichen den Status des Gerätes vor deren Verwendung zu überprüfen, um potenziellen Missbrauch zu minimieren. Dabei sammelt das Gerät Daten über den Zustand des Gerätes (z.B. ob Verified Boot aktiv ist oder deaktiviert wurde), welche einerseits Server-seitig ausgewertet werden können und andererseits einer App über eine API bereitgestellt werden können. So kann eine App z.B. feststellen, ob das Gerät modifiziert wurde und ggfs. seine Funktionen einschränken oder die Ausführung verweigern.

Die Aufgabe der Erfindung besteht darin, eine verbesserte Lösung für Anwendungsprogramme bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Anwendungsprogramm, ausgebildet in einer Ausführungsumgebung ausgeführt zu werden,
aufweisend:
- eine Dokumentationseinheit, ausgebildet eine Umgebungsinformation zu erstellen, wobei die Umgebungsinformation die Ausführungsumgebung zu einer Laufzeit des Anwendungsprogramms beschreibt, und
- eine Attestierungseinheit, ausgebildet die Umgebungsinformation kryptographisch zu schützen, wodurch eine Attestierungsinformation gebildet wird.

Das Anwendungsprogramm ist auch als eine Applikation oder eine App bezeichenbar.

Die Ausführungsumgebung ist im Sinne der Erfindung als eine Umgebung des Anwendungsprogramms zu verstehen. Das Anwendungsprogramm wird in dieser Umgebung ausgeführt, d.h. es läuft in dieser Umgebung. Die Umgebung kann somit auch als Laufzeitumgebung oder Ausführungsumgebung bezeichnet werden. Die Umgebungsinformation umfasst Informationen, die diese Ausführungsumgebung zu einer Zeit betreffen, zu welcher das Anwendungsprogramm läuft oder lief, also zur Laufzeit des Anwendungsprogramms.

Die Attestierungseinheit ist ausgebildet ein kryptographisches Schützen der Umgebungsinformation, auch als App-RTE-Fingerprint Information (mit RTE = Run-Time-Environment) bezeichenbar, durchzuführen. Dies erfolgt insbesondere durch ein Erzeugen einer digitalen Signatur, wodurch eine kryptographisch geschützte App-RTE-Fingerprint Information, auch als kryptographisch geschützte Attestierungsinformation oder Attestierungsinformation bezeichenbar, erstellt wird.

Ein Aspekt der Erfindung besteht darin, dass ein Anwendungsprogramm oder App selbst eine eigens generierte, kryptographisch geschützte Attestierung über ihre Ausführungsumgebung erstellt und bereitstellt. Die App führt dazu insbesondere ein Fingerprinting ihrer Ausführungsumgebung durch, d.h. sie verarbeitet die Roh-Information der Ausführungsumgebung vorab, und bestätigt anschließend durch die Attestierung, in welcher Art von Ausführungsumgebung sie läuft.

Somit wird vorgeschlagen, dass ein Anwendungsprogramm eine eigens generierte Attestierungsinformation erstellt, in der sie bestätigt, in welcher Art von Ausführungsumgebung sie läuft und attestiert das Ergebnis (als Rohinformation oder vorverarbeitet als Fingerprint) auf kryptographisch geschützte Art und Weise.

Dies hat den Vorteil, dass eine App eigenständig eine Attestierungsfunktionalität zur Bestätigung ihrer Laufzeitumgebung realisieren kann. Dies wiederum hat wiederum den Vorteil, dass es nicht notwendig ist, dass die Laufzeitumgebung selbst eine solche Attestierungs-Funktionalität unterstützt, und dass eine entsprechende Security-Infrastruktur vom Anbieter der Laufzeitumgebung bereitgestellt wird und zugreifbar sein muss.

Ein weiterer Vorteil einer selbst generierten Attestierung ist, dass ein App-Entwickler dies eigenständig umsetzen kann, ohne dass dazu ein kontrolliertes Ökosystem erforderlich ist, wo insbesondere starke Abhängigkeiten zur Hardware und Infrastruktur bestehen. Eine solche Lösung kann daher spezifisch für Apps mit erhöhten Security-Anforderungen an die Vertrauenswürdigkeit einer Ausführungsumgebung umgesetzt werden (insbesondere für eine Onboarding-/Provisioning-App, für eine AI-basierte Analyse von Betriebsdaten, oder ob sensible Projektierungsdaten oder Rezepturen einer App übermittelt werden) .

Vorteilhaft ist außerdem, dass der beschriebene Ansatz in einem industriellen Umfeld einfacher umzusetzen ist als eine Attestierung, wie sie von aktuell bekannten Lösungen unterstützt wird. Ein App-Entwickler kann sie eigenständig umsetzen, ohne dass dazu ein kontrolliertes Ökosystem erforderlich ist, in dem starke Abhängigkeiten zur Hardware und Infrastruktur bestehen.

Die Erfindung bietet somit einen flexiblen Mechanismus, mit dem eine verlässliche Aussage bereitgestellt werden kann, in was für einer Umgebung die App läuft.

Anschließend kann ein Prüfen der App-RTE-Attestierung/Attestierungsinformation durch die andere Entität, insbesondere den Anwender, und ein Durchführen einer Aktion in Abhängigkeit eines Ergebnisses des Prüfens erfolgen, insbesondere ein Verarbeiten von Daten der App, Bereitstellung von Daten oder Services an die App.

Das Ergebnis der Attestierung/Attestierungsinformation kann von einem Anwender insbesondere als Teil einer Bewertung durch einen Cloud-Service verwendet werden, ob einer App Zugriff auf kritische Daten gegeben werden soll, bzw. ob die von einer App erhaltenen Daten für bestimmte Operationen als vertrauenswürdig genug betrachtet werden können.

Die Attestierungsinformation kann somit vom Anwender überprüft und verwendet werden, um zu entscheiden, ob der App Zugriff auf bestimmte Daten oder Dienste gewährt wird, ob weitere Daten der App als vertrauenswürdig betrachtet werden können, ob grundsätzlich eine Verbindung zu der App aufgebaut oder terminiert werden soll. Weiterhin können die App-RTE-Attestierungsinformationen auch zu Monitoring-Zwecken analysiert und ggf. zu Audit-Zwecken persistiert werden, insbesondere in einer Produktionsdatenbank.

Weiterhin ist es für einen Anwender möglich, die von der App selbst gebildete Attestierungsinformation auf Übereinstimmung mit einer von der Laufzeitumgebung gebildeten Attestierung zu überprüfen. Dies hat für den Anwender den Vorteil, dass eine erhöhte Verlässlichkeit über die vorliegende Art der Ausführungsumgebung erreicht werden kann.

In einer Weiterbildung der Erfindung weist das Anwendungsprogramm außerdem auf:
- Eine Ausgabeeinheit, ausgebildet die Attestierungsinformation auszugeben.

Die Ausgabeeinheit ist somit ausgebildet ein Bereitstellen der kryptographisch geschützten Attestierungsinformation an eine andere Entität, insbesondere einen App-Management Server, ein Device-Management-System, einen Remote-Server, einen Shopfloor-Monitoring Server einen Cloud-basierten Backend-Dienst und/oder eine andere App, etc., durchzuführen.

In einer weiteren Weiterbildung der Erfindung umfasst die Attestierungsinformation außerdem zusätzliche Informationen. Dies hat den Vorteil, dass die von der App selbst ausgestellte Attestierung zusätzliche Informationen umfasst, die von einer von der Laufzeitumgebung ausgestellten Attestierung nicht enthalten sind. Dies ist wiederum vorteilhaft, wenn die von der Laufzeitumgebung ausgestellte Attestierung nur eine zusammenfassende Grobinformation bestätigt, insbesondere: "Laufzeitumgebung integer".

Die zusätzlichen Informationen können insbesondere ausgebildet sein als Daten, welche von der App verarbeitet werden, Daten und/oder Dienste auf welche das Anwendungsprogramm zugreift und Zugriff anfragt, Verbindungen die zu der App aufgebaut sind.

In einer weiteren Weiterbildung der Erfindung betrifft die Umgebungsinformation, welche die Ausführungsumgebung zu der Laufzeit des Anwendungsprogramms beschreibt:
- Eine Hardware der Ausführungsumgebung und/oder
- eine Infrastruktur der Ausführungsumgebung und/oder
- weitere Anwendungsprogramme der Ausführungsumgebung und/oder
- ein Betriebssystem der Ausführungsumgebung und/oder
- ein Gerät und/oder ein System auf welchem die Ausführungsumgebung ausgebildet ist,
- eine Datei der Ausführungsumgebung und/oder
- eine Eigenschaft der Ausführungsumgebung und/oder
- Daten zu Prozessor-Registern der Ausführungsumgebung oder eines der Ausführungsumgebung übergeordneten Systems und/oder
- Konfigurationsdaten des Anwendungsprogramms, insbesondere Config-Dateien für ein Anwendungsprogramm, welche insbesondere Privilegien des Anwendungsprogramms enthält und/oder
- Konfigurationsdaten eines Peripheriemoduls der Ausführungsumgebung oder eines der Ausführungsumgebung übergeordneten Systems und/oder
- Konfigurationsdaten eines Erweiterungsmoduls, insbesondere als ein PCIe ausgebildet, der Ausführungsumgebung oder eines der Ausführungsumgebung übergeordneten Systems und/oder
- Daten aus Zugriffen des Anwendungsprogramms auf Komponenten der Ausführungsumgebung oder eines der Ausführungsumgebung übergeordneten Systems und/oder
- eine Leistungsmessung der Ausführungsumgebung und/oder
- einen durch das Anwendungsprogramm zugreifbaren kryptographischen Schlüssel und/oder
- ein durch das Anwendungsprogramm zugreifbaren Sicherheits-Token und/oder
- ein durch das Anwendungsprogramm zugreifbares digitales Zertifikat.

Eine Umgebungsinformation, welche die Hardware der Ausführungsumgebung betrifft, umfasst insbesondere Securityrelevante Informationen der CPU, insbesondere Microcode-Stand, vorhandene CPU-Security-Features wie Intel-CET und deren Konfiguration (insbesondere aktiviert / nicht aktiviert), Anfälligkeit gegenüber Hardware-spezifischen Side-Channel Angriffen wie insbesondere Spectre / Meltdown.

Eine Umgebungsinformation, welche die Infrastruktur der Ausführungsumgebung betrifft, umfasst insbesondere einen Linux-Container oder eine Trusted Execution Environment (TEE) wie eine Intel SGX Enklave oder eine durch AMD SEV geschützte virtuelle Maschine. Außerdem betrifft sie insbesondere Ausgaben bestimmter, virtueller Dateien / Kernel-Schnittstellen (procfs, sysfs, spezielle Systemaufrufe), die insbesondere Hinweise darauf geben, ob die App in einer virtuellen Maschine, in einem TEE oder in einem Container ausgeführt wird.

Eine Umgebungsinformation, welche weitere Anwendungsprogramme der Ausführungsumgebung betrifft, umfasst insbesondere vorhandene Software-Binärdateien, Bibliotheken, Pakete, Konfigurationsdateien (bzw. deren Stände) inklusiv derer Konfigurationseinstellungen (insbesondere sysctl / Kernelparameter).

Eine Umgebungsinformation, welche ein Betriebssystem der Ausführungsumgebung umfasst, umfasst insbesondre Informationen zu einem Linux oder Windows Host-Betriebssystem.

Eine Umgebungsinformation, welche eine Eigenschaft der Ausführungsumgebung betrifft, umfasst insbesondere:
- Informationen zur groben Klassifizierung (Normal World vs. TEE), wie auch zur detaillierteren Beschreibung (Container mit reduzierten Privilegien) und/oder
- Informationen zu laufende Prozessen bzw. Systemdiensten (insb. ob bestimmte, security-kritische Prozesse wie eine Laufzeitintegritätsprüfung, ein Logging-Dienst wie auditd, o.Ä. laufen) und/oder
- Informationen zu offenen Ports, Netzwerkeinstellungen wie insbesondere iptables Regeln, Kernel Routing Tabellen.

Eine Umgebungsinformation, welche eine Eigenschaft der Ausführungsumgebung betrifft, sind erhaltbar:
- Insbesondere durch Daten / Ressourcen, die nur in einer TEE zugreifbar sind, wie insbesondere ein beim Einrichten der Plattform geschützter Schlüssel und/oder
- Insbesondere durch Daten zur Verfügbarkeit spezieller CPU-Instruktionen, die insbesondere nur in einer TEE wie Intel SGX ausgeführt werden können.

Eine Umgebungsinformation, welche Konfigurationsdaten des Anwendungsprogramms umfasst, betrifft insbesondere Berechtigungen der App-Prozesse, auch als Konfigurationen von App-Privilegien bezeichenbar, selbst, wie erlaubte Systemaufrufe (System-Call Whitelisting Regeln), Linux Capabilities, SELinux-Domäne / AppArmor-Profil. Die Ausführungsumgebung ist dafür verantwortlich, App-Privilegen (hier die "Daten") zuzuweisen und/oder zu konfigurieren.

Eine Umgebungsinformation, welche Daten aus Zugriffen des Anwendungsprogramms umfasst, betrifft insbesondere Daten:
- aus einem testweisen Durchführen von Zugriffen (insbesondere Systemaufrufen, Netzwerkverbindungen, Zugriff auf Peripheriekomponenten oder andere Hardwarekomponenten, durch Performance-Messungen, zugreifbare kryptographische Schlüssel, Security-Token und digitale Zertifikate) und/oder
- aus Zustandsinformationen (Hardware, Software) aus Lognachrichten (insbesondere Kernel-Log).

In einer weiteren Weiterbildung der Erfindung ist die Umgebungsinformation als Fingerprint der Ausführungsumgebung ausgebildet. Der Fingerprint kann als eine vorverarbeitete Version der Daten der Umgebung bezeichnet werden. Dies hat den Vorteil, dass insbesondere das Datenvolumen der Umgebungsinformation verringert ist und aussagekräftige Teile bezüglich der Umgebung aus den Daten ausgewählt werden.

In einer weiteren Variante wird die gesamte Roh-Informationen zu der Art der Ausführungsumgebung bzw. Teile davon, insbesondere die Werte bestimmter Konfigurationsdateien, Software- bzw. Microcode-Versionsstände kryptographisch geschützt übermittelt. Alternativ wird ein Fingerprint der Ausführungsumgebung wie in dieser Ausführungsvariante gebildet und übermittelt.

In einer weiteren Weiterbildung der Erfindung umfasst der Fingerprint der Ausführungsumgebung:
- Eine kryptographische Prüfsumme und/oder
- einen kryptographischen Hash-Wert und/oder
- einen aggregierten Hash-Wert.

In dieser Variante ist die ermittelte App-RTE Information als digitaler Fingerabdruck ausgebildet, indem in einer Vorverarbeitung insbesondere ein oder mehrere kryptographische Hash-Werte der Informationen (insbesondere ein aggregierter Hash-Wert oder eine Liste von betrachteten Eigenschaften plus entsprechende Hash-Werte der ermittelten Eigenschaften) berechnet werden.

In einer weiteren Weiterbildung der Erfindung weist das Anwendungsprogramm außerdem auf:
- eine Prüfeinheit, ausgebildet die Umgebungsinformation und/oder die Attestierungsinformation zu prüfen.

Alternativ oder zusätzlich zu einem Prüfen durch den Anwender findet eine Prüfung der berechneten App-RTE-Fingerprint Information durch die App selbst und eine Generierung eines Ergebnisses (z.B. "App-RTE OK / NOK", "App-RTE ist ein TEE", etc.) statt. Dies erfolgt insbesondere durch ein Heranziehen einer Referenzinformation (welche als Wahrheit betrachtet wird) über die eigene Laufzeitumgebung durch die App selbst.

In einer weiteren Weiterbildung der Erfindung ist die Attestierungseinheit ausgebildet, die Umgebungsinformation durch eine kryptographische Signatur kryptographisch zu schützen, wodurch die Attestierungsinformation gebildet wird.

Insbesondere ist somit die Attestierungseinheit, ausgebildet die Umgebungsinformation kryptographisch zu signieren, wodurch ein kryptographischer Schutz erstellt wird und wodurch eine Attestierungsinformation gebildet wird. Alternativ kann das Bilden der Signatur durch eine weitere Einheit erfolgen.

Alternativ zu der Signatur kann ein Verschlüsseln, insbesondere mit einem symmetrischen Schlüssel, erfolgen, um einen kryptographischen Vertraulichkeitsschutz zu erstellen.

In einer weiteren Weiterbildung der Erfindung ist die Attestierungseinheit ausgebildet, die Umgebungsinformation durch einen obfuszierten kryptographischen Schutzmechanismus zu schützen, wodurch die Attestierungsinformation gebildet wird. Insbesondere ist somit die Attestierungseinheit, ausgebildet die Umgebungsinformation in obfuszierter Form kryptographisch zu schützen, wodurch ein kryptographischer Schutz erstellt wird und wodurch eine Attestierungsinformation gebildet wird. Obfusziert wird dabei insbesondere eine Routine und/oder eine Funktion und/oder kryptographisches Material, insbesondere ein Schlüssel und/oder eine Signaturfunktion, welche zur Bildung der Attestierungsinformation verwendet werden. Alternativ kann die Obfuskation durch eine weitere Einheit erfolgen.

In einer Variante können, zum verbesserten Schutz, die Fingerprint-Logik und/oder das Geheimnis für den kryptographischen Schutz obfusziert werden. Eine Manipulation wird somit erschwert. Dies kann unabhängig von der Ausführungsumgebung zu einem verbesserten Schutz des Mechanismus führen.

In einer weiteren Weiterbildung der Erfindung ist die Attestierungseinheit ausgebildet, die kryptographische Signatur durch Hinzunahme eines Geheimnisses zu bilden, wodurch die Attestierungsinformation gebildet wird, wobei das Geheimnis insbesondere als ein privater Schlüssel oder ein symmetrischer Schlüssel ausgebildet ist.

Hierzu kann insbesondere ein der App zur Verfügung stehendes Geheimnis (insbesondere ein privater Schlüssel, vorab ausgetauschter symmetrischer Schlüssel) zum Verschlüsseln bzw. Generieren einer digitalen Signatur verwendet werden. Ist das Geheimnis insbesondere nur in einer geschützten Umgebung (TEE; z.B. Intel SGX Enklave, Intel TDX oder AMD SEV geschützte virtuelle Maschine, Secure World einer ARM TrustZone Implementierung) verfügbar, kann dies insbesondere auch als Indiz / Beweis für die Eigenschaft "TEE" zur Beschreibung der Ausführungsumgebung und als Umgebungsinformation verwendet werden.

In einer weiteren Weiterbildung der Erfindung weist das Anwendungsprogramm außerdem auf:
- eine Speicherfunktion, ausgebildet ein Speichern der Attestierungsinformation einzuleiten.

Die Speicherfunktion gibt insbesondere einen Befehl für ein Speichern der Attestierungsinformation in eine Speichereinheit.

Weiterhin ist es möglich, dass die App die ermittelten App-RTE-Informationen kryptographisch geschützt speichert, vorzugsweise mittels eines für die App-Instanz spezifischen Plattform-Key. Dies hat den Vorteil, dass ein möglicherweise aufwendiges Fingerprinting der App-RTE durch die App nicht wiederholt erfolgen muss, sondern dass dies nur bei der Installation oder bei einem erstmaligen Start oder nach einem Update oder auf Nutzeranforderung oder auf Anforderung durch einen Server oder anderen berechtigten Kommunikationspartner erfolgt. Dies ist vor allem dann eine Möglichkeit, wenn Änderungen der Ausführungsumgebung (bzw. Merkmale der Ausführungsumgebung) durch einen Angreifer sehr unwahrscheinlich oder schwer durchzuführen sind.

In einer weiteren Variante kann die App-RTE-Attestierungsinformationen direkt oder nach einer Vorverarbeitung (insbesondere eine Verschlüsselung, Anonymisierung/Pseudonymisierung, Überführung in ein Verifiable-Credential) einer verteilten Datenbank zur Persistierung oder zu einer Bestätigung bereitgestellt bzw. abgelegt werden, insbesondere einer Distributed Ledger Datenbank (Blockchain). Dies hat den Vorteil, dass die App-RTE-Attestierungsinformation in einer geschützten Form abgelegt und gespeichert ist.

In einer weiteren Weiterbildung der Erfindung ist die Dokumentationseinheit ausgebildet, die Umgebungsinformation:
- während der Laufzeit des Anwendungsprogramms und/oder
- rückblickend auf die Laufzeit des Anwendungsprogramms zu erstellen.

Wird die Umgebungsinformation rückblickend auf die Laufzeit des Anwendungsprogramms erstellt, umfasst dies insbesondere ein Erstellen der Umgebungsinformation nach einem Auftreten bestimmten Events, während die Umgebungsinformation diese Events trotzdem enthält und beschreibt. Außerdem enthält die Umgebungsinformation insbesondere Informationen zu anderen Anwendungsprogrammen der Laufzeitumgebung, welche zu dem Zeitpunkt, wenn die Umgebungsinformation erstellt wird, nicht mehr vorhanden sind.

Die Erfindung umfasst außerdem eine Ausführungsumgebung aufweisend ein erfindungsgemäßes Anwendungsprogramm.

Die Ausführungsumgebung, auch als App-RTE bezeichenbar, ist dabei insbesondere durch eine der folgenden, bzw. durch eine Kombination der folgenden Elemente, realisiert:
- ein Natives Linux-Hostsystem,
- eine Container Laufzeitumgebung (z.B. Docker oder Podman),
- eine Virtuelle Maschine, z.B. Qemu-KVM mit Linux-Gastsystem,
- eine Trusted Execution Environment, z.B. Intel SGX, Intel TDX / MKTME, AMD SEV (kryptographische und logische Isolation auf Hardware-Ebene) mit Linux-Gastsystem, ARM TrustZone Umgebung (logische Isolation auf Hardware-Ebene) .

Die Erfindung umfasst außerdem ein Steuergerät aufweisend eine erfindungsgemäße Ausführungsumgebung.

Die Erfindung umfasst außerdem ein Verfahren zum Bilden einer Attestierungsinformation eines Anwendungsprogramms, wobei das Anwendungsprogramm in einer Ausführungsumgebung ausgeführt wird,
mit den Schritten:
- ein Erstellen einer Umgebungsinformation, wobei die Umgebungsinformation die Ausführungsumgebung zu einer Laufzeit des Anwendungsprogramms beschreibt, und
- ein kryptographisches Schützen der Umgebungsinformation, wodurch eine Attestierungsinformation gebildet wird.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung eines erfindungsgemä-ßen Anwendungsprogramms in einer Ausführungsumge-bung eines Steuergeräts und
- Fig. 2: ein Ablaufdiagramm des erfindungsgemäßen Verfah-rens.

### DETAILLIERTE BESCHREIBUNG DER ERFINDUNG

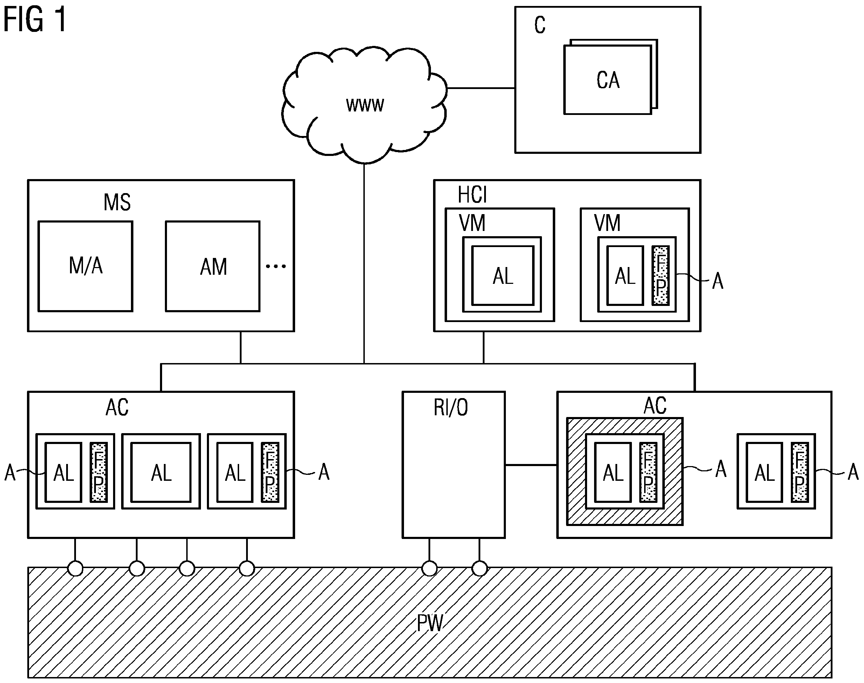

Fig. 1 zeigt eine schematische Darstellung eines erfindungsgemäßen Anwendungsprogramms A in einer Ausführungsumgebung eines Steuergeräts.

Das Anwendungsprogramm A ist ausgebildet in einer Ausführungsumgebung ausgeführt zu werden,
aufweisend:
- eine Dokumentationseinheit, ausgebildet eine Umgebungsinformation zu erstellen, wobei die Umgebungsinformation die Ausführungsumgebung zu einer Laufzeit des Anwendungsprogramms A beschreibt, wobei die Umgebungsinformation insbesondere als Fingerprint der Ausführungsumgebung ausgebildet ist, und
- eine Attestierungseinheit, ausgebildet die Umgebungsinformation kryptographisch zu schützen, wodurch eine Attestierungsinformation gebildet wird.

Das Anwendungsprogramm A, auch als App A bezeichenbar, bestehend aus einer App-Logik AL, auch als Application Logic bezeichenbar, sowie insbesondere einer Komponente zum Fingerprinting FP, auch als Fingerprint Logik FP bezeichenbar. Die Komponente zum Fingerprinting FP ist insbesondere als Teil der Dokumentationseinheit ausgebildet.

Das Anwendungsprogramm A wird in einem Automatisierungsszenario auf unterschiedlichen Steuergeräten AC und deren Laufzeitumgebungen ausgeführt. Insbesondere wird die App A auf einer Automatisierungskomponente AC, auch als Automation Component bezeichenbar, mit Steuerungsaufgaben, wie einem Industrie-PC, der an eine Remote-IO Komponente R I/O angebunden ist, oder auf virtuellen Maschinen als Teil eines Hyper-Converged-Infrastructure-Systems HCI, oder auf einem Shopfloor-Server ausgeführt. Die Steuergeräte AC sind mit der realen Welt PS, auch als physikalische Welt PS oder Physical World PS bezeichenbar, verbunden.

Die Anwendungsprogramme A werden über das Internet www aus einer Cloud-Umgebung C geladen und sind somit auch als Cloud-Applikationen CA oder Cloud-Anwendungsprogramme bezeichenbar.

Die Anwendungsprogramme A werden über einen Management Server MS verwaltet. Der Management Server MS weist eine Monitoring und Analytics Komponente M/A und eine App Management Komponente AM auf.

Das Gerät stellt dabei eine oder mehrere Ausführungsumgebungen, auch als App-RTE bezeichenbar, zur Verfügung, in denen eine App A ausgeführt werden kann.

Eine App/Anwendungsprogramm A implementiert eine eigene App-RTE Fingerprinting Logik FP. Die Fingerprinting Logik FP wird zur Laufzeit durch die App A verwendet, um Informationen und Inhalte der App-RTE zu ermitteln und zu verarbeiten.

Die verarbeiteten Informationen können durch eine Attestierungseinheit der Fingerprinting Logik FP oder der App-Logik AL kryptographisch geschützt werden. Das Resultat, welches das App-RTE charakterisiert, wird anschließend übermittelt. Dabei können sowohl Informationen zur groben Klassifizierung (Normal World vs. TEE), wie auch zur detaillierteren Beschreibung (Container mit reduzierten Privilegien) ermittelt und verarbeitet werden.

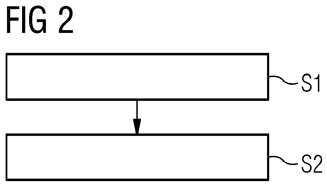

Fig. 2 zeigt ein Ablaufdiagramm des erfindungsgemäßen Verfahrens zum Bilden einer Attestierungsinformation eines Anwendungsprogramms, wobei das Anwendungsprogramm in einer Ausführungsumgebung ausgeführt wird,
mit den Schritten:
- Schritt S1: Ein Erstellen einer Umgebungsinformation, wobei die Umgebungsinformation die Ausführungsumgebung zu einer Laufzeit des Anwendungsprogramms beschreibt, und
- Schritt S2: Ein kryptographisches Schützen der Umgebungsinformation, wodurch eine Attestierungsinformation gebildet wird.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Anwendungsprogramm (A), ausgebildet in einer Ausführungsumgebung ausgeführt zu werden,
aufweisend:
- eine Dokumentationseinheit, ausgebildet eine Umgebungsinformation zu erstellen, wobei die Umgebungsinformation die Ausführungsumgebung zu einer Laufzeit des Anwendungsprogramms (A) beschreibt, und
- eine Attestierungseinheit, ausgebildet die Umgebungsinformation kryptographisch zu schützen, wodurch eine Attestierungsinformation gebildet wird.

2. Anwendungsprogramm (A) nach Anspruch 1,
außerdem aufweisend:
- Eine Ausgabeeinheit, ausgebildet die Attestierungsinformation auszugeben.

3. Anwendungsprogramm (A) nach einem der vorhergehenden Ansprüche,
wobei die Attestierungsinformation außerdem zusätzliche Informationen umfasst.

4. Anwendungsprogramm (A) nach einem der vorhergehenden Ansprüche,
wobei die Umgebungsinformation, welche die Ausführungsumgebung zu der Laufzeit des Anwendungsprogramms (A) beschreibt, betrifft:
- Eine Hardware der Ausführungsumgebung und/oder
- eine Infrastruktur der Ausführungsumgebung und/oder
- weitere Anwendungsprogramme (A) der Ausführungsumgebung und/oder
- ein Betriebssystem der Ausführungsumgebung und/oder
- ein Gerät und/oder ein System auf welchem die Ausführungsumgebung ausgebildet ist,
- eine Datei der Ausführungsumgebung und/oder
- eine Eigenschaft der Ausführungsumgebung und/oder
- Daten zu Prozessor-Registern der Ausführungsumgebung oder eines der Ausführungsumgebung übergeordneten Systems und/oder
- Konfigurationsdaten des Anwendungsprogramms (A) und/oder
- Konfigurationsdaten eines Peripheriemoduls der Ausführungsumgebung oder eines der Ausführungsumgebung übergeordneten Systems und/oder
- Konfigurationsdaten eines Erweiterungsmoduls der Ausführungsumgebung oder eines der Ausführungsumgebung übergeordneten Systems und/oder
- Daten aus Zugriffen des Anwendungsprogramms (A) auf Komponenten der Ausführungsumgebung oder eines der Ausführungsumgebung übergeordneten Systems und/oder
- eine Leistungsmessung der Ausführungsumgebung und/oder
- einen durch das Anwendungsprogramm (A) zugreifbaren kryptographischen Schlüssel und/oder
- ein durch das Anwendungsprogramm (A) zugreifbaren Sicherheits-Token und/oder
- ein durch das Anwendungsprogramm (A) zugreifbares digitales Zertifikat.

5. Anwendungsprogramm (A) nach einem der vorhergehenden Ansprüche,
wobei die Umgebungsinformation als Fingerprint der Ausführungsumgebung ausgebildet ist.

6. Anwendungsprogramm (A) nach Anspruch 5,
wobei der Fingerprint (FP) der Ausführungsumgebung umfasst:
- Eine kryptographische Prüfsumme und/oder
- einen kryptographischen Hash-Wert und/oder
- einen aggregierten Hash-Wert.

7. Anwendungsprogramm (A) nach einem der vorhergehenden Ansprüche,
außerdem aufweisend:
- eine Prüfeinheit, ausgebildet die Umgebungsinformation und/oder die Attestierungsinformation zu prüfen.

8. Anwendungsprogramm (A) nach einem der vorhergehenden Ansprüche,
wobei die Attestierungseinheit ausgebildet ist, die Umgebungsinformation durch eine kryptographische Signatur kryptographisch zu schützen, wodurch die Attestierungsinformation gebildet wird.

9. Anwendungsprogramm (A) nach Anspruch 8,
wobei die Attestierungseinheit ausgebildet ist, die kryptographische Signatur durch Hinzunahme eines Geheimnisses zu bilden, wodurch die Attestierungsinformation gebildet wird, wobei das Geheimnis insbesondere als ein privater Schlüssel oder ein symmetrischer Schlüssel ausgebildet ist.

10. Anwendungsprogramm (A) nach einem der vorhergehenden Ansprüche,
wobei die Attestierungseinheit ausgebildet ist, die Umgebungsinformation durch einen obfuszierten kryptographischen Schutzmechanismus zu schützen, wodurch die Attestierungsinformation gebildet wird.

11. Anwendungsprogramm (A) nach einem der vorhergehenden Ansprüche,
außerdem aufweisend:
- eine Speicherfunktion, ausgebildet ein Speichern der Attestierungsinformation einzuleiten.

12. Anwendungsprogramm (A) nach einem der vorhergehenden Ansprüche,
wobei die Dokumentationseinheit ausgebildet ist, die Umgebungsinformation:
- während der Laufzeit des Anwendungsprogramms (A) und/oder
- rückblickend auf die Laufzeit des Anwendungsprogramms (A)
zu erstellen.

13. Ausführungsumgebung aufweisend ein Anwendungsprogramm (A) nach einem der vorherigen Ansprüche.

14. Steuergerät (AC, R I/O) aufweisend eine Ausführungsumgebung nach Anspruch 13.

15. Verfahren zum Bilden einer Attestierungsinformation eines Anwendungsprogramms (A), wobei das Anwendungsprogramm (A) in einer Ausführungsumgebung ausgeführt wird,
mit den Schritten:
- ein Erstellen (S1) einer Umgebungsinformation, wobei die Umgebungsinformation die Ausführungsumgebung zu einer Laufzeit des Anwendungsprogramms beschreibt, und
- ein kryptographisches Schützen (S2) der Umgebungsinformation, wodurch eine Attestierungsinformation gebildet wird.
